# EUROPÄISCHE PATENTSCHRIFT

(11) **EP 3 433 218 B1**
(45) Veröffentlichungstag und Bekanntmachung des Hinweises auf die Patenterteilung: **22.05.2024**
(21) Anmeldenummer: 17712147.2
(22) Anmeldetag: 21.03.2017
(51) Int. Cl.: C04B 28/02, C04B 28/14, C04B 40/00, C09K 8/467

(54) **ZUSAMMENSETZUNG AUF BASIS VON CALCIUMOXID**
COMPOSITION BASED ON CALCIUM OXIDE
COMPOSITION À BASE D'OXYDE DE CALCIUM

(30) Priorität: 22.03.2016 EP 16161767; 22.03.2016 EP 16161765; 22.03.2016 EP 16161766
(43) Veröffentlichungstag der Anmeldung: 30.01.2019
(73) Patentinhaber: Sika Technology AG, 6340 Baar (CH)
(72) Erfinder: BÜRGE, Christian, 5503 Schafisheim (CH); MÄDER, Gilbert, 8460 Marthalen (CH); WOMBACHER, Franz, 8916 Jonen (CH)
(74) Vertreter: Sika Patent Attorneys
(86) Internationale Anmeldenummer: PCT/EP2017/056745
(87) Internationale Veröffentlichungsnummer: WO 2017/162700

(56) Entgegenhaltungen:
- EP-A1- 2 128 110
- WO-A1-2015/177232
- DE-A1- 3 632 364
- DE-U1-202004 019 019
- US-A- 5 160 376
- DATABASE WPI Week 200116 2001 Thomson Scientific, London, GB; AN 2001-157360 XP002770562, & RU 2 159 747 C2 (UNIV N CAUCASUS TECHN) 27. November 2000 (2000-11-27)

## Beschreibung

### Technisches Gebiet

Die Erfindung betrifft Zusammensetzungen enthaltend Calciumoxid, insbesondere Erhärtungsbeschleuniger für mineralische Bindemittel, entsprechende Bindemittelzusammensetzungen und daraus hergestellte Formkörper. Des Weiteren bezieht sich die Erfindung auf Verwendungen und Verfahren, unter anderem zur Beschleunigung des Erhärtens einer mineralischen Bindemittelzusammensetzung, und zur Herstellung von Zusammensetzungen. Weiter betrifft die Erfindung die Verwendungen von ausgewählten Substanzen zur Stabilisierung einer Zusammensetzung enthaltend Calciumoxid und Wasser.

### Stand der Technik

Die Herstellung von Zement generiert eine beträchtliche Menge an klimarelevantem CO₂. Um die CO₂-Emissonen zu reduzieren, kann Zement in Bindemittelzusammensetzungen teilweise durch latent-hydraulische und/oder puzzolanische Zementzusatzstoffe wie z.B. Flugaschen, Schlacken oder Silicastaub ersetzt werden. Derartige Zusatzstoffe entstehen als Nebenprodukte in verschiedenen Industrieprozessen und sind daher in Bezug auf die CO₂-Bilanz vorteilhaft. Jedoch benötigt das Abbinden solcher Zementzusatzstoffe ohne zusätzliche Massnahmen deutlich länger als bei hydraulischem Zement. Dies ist insbesondere im Hinblick auf hohe Frühfestigkeiten von Bindemittelzusammensetzungen nachteilig. Es ist daher erforderlich, das Abbinden und Erhärten von Bindemittelzusammensetzungen enthaltend latent-hydraulische und/oder puzzolanische Zusatzstoffe zu beschleunigen.

Eine ähnliche Problematik ergibt sich bei der Herstellung von Beton- oder Stahlbetonfertigteilen sowie bei Fahrbahn- oder Pistensanierungen. Dabei wird üblicherweise eine hohe Frühfestigkeit gefordert, damit die Fertigteile bereits nach wenigen Stunden aus den Schalungen herausgenommen, transportiert, gestapelt oder vorgespannt bzw. die Fahrbahnen oder Pisten befahren oder belastet werden können. Darum ist auch bei derartigen Anwendungen eine Beschleunigung des Erhärtungsvorgangs erwünscht oder notwendig.

Um diese Zielsetzung in der Praxis zu erreichen, werden neben leistungsfähigen Betonrezepturen, mit z.B. niedrigen w/z-Werten oder hohen Zementgehalten, spezielle Substanzen eingesetzt, welche das Erhärten von mineralischen Bindemitteln, insbesondere zementösen Bindemitteln, beschleunigen. Gebräuchlich sind beispielsweise Erhärtungsbeschleuniger basierend auf Aminoalkoholen, Halogeniden, Pseudohalogeniden, Nitriten, Nitraten, Aluminiumsalzen, Glykolen, Glyzerin oder α-Hydroxycarbonsäuren.

Viele der heute bekannten Erhärtungsbeschleuniger, beziehen sich auf Spritzbeton. Diese Beschleuniger haben den Effekt, dass die Zement- oder Betonmischungen nach Zugabe des Beschleunigers sehr schnell abbinden, was bei Spritzbetonanwendungen meist auch erwünscht ist. Wenn die mineralischen Bindemittelzusammensetzungen nach dem Anmachen aber noch weiter verarbeitet werden müssen, sind solche bekannten Beschleunigersysteme aber kaum geeignet.

Die WO 2003/000617 A1 (Sika AG) beschreibt z.B. einen Erhärtungsbeschleuniger für mineralische Bindemittelzusammensetzungen basierend auf einem Alkanolamin, einem anorganischen Nitrat, einer Carbonsäure und einem Polyol.

Derartige und bekannte Beschleuniger sind zwar meist durchaus wirksam, haben jedoch häufig den Nachteil, dass sie teuer sind, ein beschränktes Einsatzgebiet aufweisen und teilweise einen stark negativen Einfluss auf die Verarbeitungszeit und die Endfestigkeiten von Mörtel und Beton haben.

Ebenfalls bekannt sind Beschleuniger, wie sie in der EP 2 128 110 A1 (Sika Technology AG) beschrieben sind. Solche Systeme basieren auf Ester von mehrwertigen Alkoholen, die eine hohe Frühfestigkeit ermöglichen, ohne die Verarbeitungszeit oder die Endfestigkeit allzu negativ zu beeinflussen. Eine Weiterentwicklung davon ist in der WO 2015/177232 A1 (Sika Technology AG) beschrieben, bei welcher zusätzlich Calciumverbindungen eingesetzt werden. Die WO 2015/177232 A1 offenbart Erhärtungsbeschleuniger für Zement- oder Betonmischungen, die einerseits die Frühfestigkeit erhöhen, andererseits die Verarbeitbarkeit nicht wesentlich beeinträchtigen. Diese Erhärtungsbeschleuniger umfassen mindestens einen Phosphorsäureester eines mehrwertigen Alkohols und mindestens eine Calciumverbindung. Die WO 2015/177232 A1 enthält keine Lehre zu geeigneten Verhältnissen der Beschleunigerkomponenten in wässriger Suspension.

Es hat sich jedoch gezeigt, dass die Wirkung solcher Beschleuniger je nach Zeitpunkt der Zugabe oder dem Zustand der Bindemittelkomponenten variieren kann.

Nebst den vorstehend genannten Anwendungen gelten beispielsweise auch bei der Erstellung, Abdichtung, Auskleidung und/oder Reparatur von Bohrlöchern, z.B. in Untergrundbohrlöchern bei der Erschliessung von Erdöl- und Erdgasbohrungen, spezielle Anforderungen. Hierbei herrschen häufig hohe Temperaturen und/oder Drücke vor, was z.B. das Zementieren oder Abdichten in solchen Bereichen besonders anspruchsvoll macht. Zudem verfügen Zementschlämme oder Bohrlochzemente meist über spezielle Zusammensetzungen, welche nicht direkt mit herkömmlichen Mörteln oder Betonzusammensetzungen vergleichbar sind. Herkömmliche Zusatzmittel, beispielsweise Erhärtungsbeschleuniger, sind daher unter solchen speziellen Bedingungen teilweise nur bedingt wirksam.

Es besteht deshalb weiterhin das Bedürfnis, nach neuen und verbesserten Lösungen, welche die vorstehend genannten Nachteile möglichst überwinden und im Besonderen die Errichtung oder Bereitstellung von Bauten, Bauteilen, Fertigteilen, Abdichtungen, Beschichtungen und dergleichen im Baubereich vereinfachen und/oder effizienter gestalten.

### Darstellung der Erfindung

Die vorliegenden Erfindung befasst sich damit, die Errichtung oder Bereitstellung von Bauten, Bauteilen, Bauelementen, Fertigteilen, Abdichtungen, Beschichtungen und dergleichen im Baubereich zu vereinfachen und/oder effizienter zu gestalten, was aber nicht beansprucht wird. Hierfür sollen entsprechende Mittel oder Zusammensetzung bereitgestellt werden, welche mit Vorteil auch unter anspruchsvollen Bedingungen, beispielsweise bei hohen Drücken und/oder hohen Temperaturen, im Zusammenhang mit mineralischen Bindemitteln wirksam sein sollen und für verschiedene und unterschiedliche Anwendungen möglichst flexibel einsetzbar sind. Die Aufgabe der vorliegenden Erfindung ist es, einen verbesserten Erhärtungsbeschleuniger für mineralische Bindemittel zu schaffen. Der erfindungsgemässe Erhärtungsbeschleuniger soll gegenüber bekannten Erhärtungsbeschleunigern insbesondere höhere Frühdruckfestigkeiten von Zement-, Mörtel- und/oder Betonzusammensetzungen ermöglich und flexibel einsetzbar sein. Zudem soll der Erhärtungsbeschleuniger die Verarbeitbarkeit von angemachten mineralischen Bindemittelzusammensetzungen nur wenig oder gar nicht beeinträchtigen. Ebenfalls wünschenswert ist ein Erhärtungsbeschleuniger, welcher nach Möglichkeit unabhängig vom Zustand oder der Qualität der Bindemittelkomponenten flexibel verwendet werden kann. Im Besonderen soll die Wirkung des Erhärtungsbeschleunigers unabhängig vom Zeitpunkt der Zugabe möglichst konstant bleiben. Zudem sollen entsprechende Verfahren und Verwendungen bereitgestellt werden, welche das Erreichen dieser Ziele effektiv ermöglichen.

Überraschenderweise wurde gefunden, dass die erfindungsgemässe Aufgabe durch eine Zusammensetzung gemäss Anspruch 1 gelöst werden kann.

Wie sich gezeigt hat, können durch die erfindungsgemässe Kombination aus Calciumoxid in Partikelform und einem Inhibitor für die Reaktion von Calciumoxid mit Wasser Zusammensetzungen hergestellt werden, welche bereits vor dem Anmachen einer mineralischen Bindemittelzusammensetzung in Wasser vorgemischt werden können und in dieser Form über längere Zeit, im Besonderen bis zu mehreren Stunden, stabil bleiben.

Weiter zeigen die erfindungsgemässen Zusammensetzungen bei der Verwendung als Erhärtungsbeschleuniger unabhängig vom Zeitpunkt der Zugabe eine im Wesentlichen konstante Wirkung. Insbesondere bleiben derartige Zusammensetzungen auch über längere Zeit wirksam, wenn sie vor dem Anmachen einer mineralischen Bindemittelzusammensetzung einer Komponente der Zusammensetzung, z.B. einem Bindemittel und/oder den Aggregaten, zugegeben werden. Dies insbesondere auch wenn die Komponente der Bindemittelzusammensetzung Restfeuchtigkeit enthält, wie dies beispielsweise bei Aggregaten regelmässig der Fall ist. Insgesamt wird somit eine erhöhte Flexibilität bei der Verwendung der Zusammensetzungen oder der Beschleuniger erreicht.

Des Weiteren können die Druckfestigkeiten von mineralischen Bindemittelzusammensetzungen mit den erfindungsgemässen Zusammensetzungen, insbesondere 4 - 8 Stunden nach dem Anmachen, signifikant erhöht werden. Zudem sind die erfindungsgemässen Zusammensetzungen in Bezug auf das Kosten/Leistungsverhältnis äusserst interessant. Weiter wurde gefunden, dass die erfindungsgemässen Zusammensetzungen bezüglich unerwünschtem Ansteifverhalten von mineralischen Bindemitteln oder mineralischen Bindemittelzusammensetzungen, insbesondere zementösen Systemen, deutlich weniger problematisch sind als bekannte Beschleuniger.

Im Vergleich zu nicht beschleunigten mineralischen Bindemittelzusammensetzungen erlauben die erfindungsgemässen Zusammensetzungen bei Verwendung als Beschleuniger in der Praxis beispielsweise ein deutlich früheres Ausschalen oder Belasten von hergestellten Fertigteilen. Gleichzeitig aber bleibt die Verarbeitbarkeit der erfindungsgemäss beschleunigten Zusammensetzungen dennoch über einen verhältnismässig langen Zeitraum auf einem für die Praxis geeigneten Niveau erhalten.

Des Weiteren wurde festgestellt, dass die erfindungsgemässen Zusammensetzungen in weiten Bereichen unabhängig von der Qualität der eingesetzten Aggregate als Erhärtungsbeschleuniger wirksam sind. Insbesondere hat sich gezeigt, dass Beschleuniger herstellbar sind, welche durch das Vorhandensein von Magnesiumcarbonat, welches z.B. in Kalksteinfüllern oder Sanden als Nebenbestandteil mit einem Anteil von bis zu einigen Gewichtsprozent vorkommen kann, in ihrer Wirkung wenig bis gar nicht beeinträchtigt werden.

Zudem kann bei den erfindungsgemässen Zusammensetzungen bei Verwendung als Erhärtungsbeschleuniger bei Bedarf auf möglicherweise problematische Substanzen wie Chloride, Nitrate, Nitrite und Thiocyanate verzichtet werden. Dies ohne signifikante Einbussen in Bezug auf die Beschleunigungswirkung in Kauf zu nehmen.

Weitere Vorteile der erfindungsgemässen Zusammensetzungen sind darin zu sehen, dass deren zeitliche Stabilität, beispielsweise durch die Menge des verwendeten Inhibitors, gezielt eingestellt werden kann. Dies macht es möglich, die Zusammensetzungen für unterschiedliche Anwendungen einzusetzen. Damit können die Zusammensetzungen z.B. als beschleunigende Zusätze in unterschiedlichen mineralischen Bindemittelzusammensetzungen, z.B. Spritzbeton-, Bohrlochzement-, Zementschlamm-, Mörtel- und/oder Betonzusammensetzungen, zum Einsatz kommen.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt betrifft die Erfindung eine Zusammensetzung, insbesondere einen Erhärtungsbeschleuniger, enthaltend oder bestehend aus:
a) 25 - 60 Gew.-% Calciumoxid in Partikelform,
b) 0.1 - 15 Gew.-%, insbesondere 0.1 - 10 Gew.-%, bevorzugt 0.2 - 5 Gew.-%, im Besonderen 0.3 - 2 Gew.-%, eines Inhibitors für die Reaktion von Calciumoxid mit Wasser, ausgewählt aus einem Phosphorsäureester eines mehrwertigen Alkohols und/oder aus Kohlenhydraten, bevorzugt aus einem Phosphorsäureester eines mehrwertigen Alkohols, und
c) 25 - 60 Gew.-% Wasser,

jeweils bezogen auf das Gesamtgewicht der Zusammensetzung,
wobei die Zusammensetzung als Aufschlämmung oder Suspension vorliegt.

Unter einem "Inhibitor" ist vorliegend eine Substanz zu verstehen, welche eine oder mehrere chemische Reaktionen so beeinflusst, dass diese verlangsamt, gehemmt und/oder verhindert werden. Der anspruchsgemässe Inhibitor wirkt vorliegend auf die Reaktion von Calciumoxid mit Wasser, bei welcher Calciumoxid oder CaO zu Calciumhydoxid oder Ca(OH)₂ abreagiert. Der anspruchsgemässe Inhibitor ist somit dazu geeignet, diese Reaktion zu verlangsamen, zu hemmen oder zu verhindern. Der eingesetzte Inhibitor ist insbesondere in der Lage, eine wässrige Aufschlämmung oder Suspension des Calciumoxids während wenigstens 15 Minuten, bevorzugt während wenigstens 30 Minuten, mit Vorteil während wenigstens 60 Minuten, speziell während wenigstens 120 Minuten zu stabilisieren, so dass die Menge des eingesetzten Calciumoxids in der Zusammensetzung in diesem Zeitraum unter Standardbedingungen (Raumtemperatur von 25°C; Luftdruck 1 atm) um höchstens 10 Gew.-%, insbesondere höchstens 5 Gew.-% oder höchstens 1 Gew-% abnimmt.

Der Begriff "Partikel" bzw. "Partikelform" bezeichnet vorliegend Feststoffe mit einer durchschnittlichen Partikelgrösse von weniger als 1'000 µm, insbesondere weniger als 500 µm, bevorzugt weniger als 100 µm. Die Partikelgrösse, deren Verteilung oder die durchschnittliche Partikelgrösse können insbesondere durch Laserbeugung, bevorzugt entsprechend Norm ISO 13320:2009, bestimmt werden. Insbesondere wird hierfür ein Gerät Mastersizer 2000 mit einer Dispergiereinheit Hydro 2000G und die Software Mastersizer 2000 der Firma Malvern Instruments GmbH (Deutschland) verwendet. Als Messmedium ist z.B. Isopropanol geeignet. Die durchschnittliche Partikelgrösse entspricht vorliegend insbesondere dem D50-Wert (50% der Partikel sind kleiner als der angegebene Wert, 50% entsprechend grösser).

Unter dem Ausdruck "mineralisches Bindemittel" ist insbesondere ein Bindemittel zu verstehen, welches in Anwesenheit von Wasser in einer Hydratationsreaktion zu festen Hydraten oder Hydratphasen reagiert. Dies kann beispielsweise ein hydraulisches Bindemittel (z.B. Zement oder hydraulischer Kalk), ein latent hydraulisches Bindemittel (z.B. Schlacke), ein puzzolanisches Bindemittel (z.B. Flugasche) oder ein nicht hydraulisches Bindemittel (Gips oder Weiss kalk) sein. Eine "mineralische Bindemittelzusammensetzung" ist entsprechend eine Zusammensetzung enthaltend mindestens ein mineralisches Bindemittel.

Unter einem "zementösen Bindemittel" oder einer "zementösen Bindemittelzusammensetzung" wird vorliegend insbesondere ein Bindemittel oder eine Bindemittelzusammensetzung mit einem Anteil von wenigstens 5 Gew.-%, insbesondere wenigstens 20 Gew.-%, bevorzugt wenigstens 35 Gew.-%, im Speziellen wenigstens 65 Gew.-%, Zementklinker verstanden. Der Zementklinker ist bevorzugt ein Portlandzementklinker. Mit Zementklinker ist im vorliegenden Zusammenhang insbesondere gemahlener Zementklinker gemeint.

Insbesondere enthält das mineralische Bindemittel oder die Bindemittelzusammensetzung ein hydraulisches Bindemittel, bevorzugt Zement. Besonders bevorzugt ist ein Zement mit einem Zementklinkeranteil von ≥ 35 Gew.-%, Insbesondere ist der Zement vom Typ CEM I, II oder III, bevorzugt Zement vom Typ CEM I (gemäss Norm EN 197-1). Ein Anteil des hydraulischen Bindemittels am gesamten mineralischen Bindemittel beträgt mit Vorteil wenigstens 5 Gew.-%, insbesondere wenigstens 20 Gew.-%, bevorzugt wenigstens 35 Gew.-%, im Speziellen wenigstens 65 Gew.-%. Gemäss einer weiteren vorteilhaften Ausführungsform besteht das mineralische Bindemittel wenigstens 95 Gew.-% aus hydraulischem Bindemittel, insbesondere aus Zementklinker.

Es kann aber auch vorteilhaft sein, wenn die Bindemittelzusammensetzung zusätzlich oder anstelle eines hydraulischen Bindemittels andere Bindemittel enthält. Dies sind insbesondere latent hydraulische Bindemittel und/oder puzzolanische Bindemittel. Geeignete latenthydraulische und/oder puzzolanische Bindemittel sind z.B. Schlacke, Flugasche und/oder Silicastaub. Ebenso kann die Bindemittelzusammensetzung inerte Stoffe wie z.B. Kalksteinmehl, Quarzmehl und/oder Pigmente enthalten. In einer vorteilhaften Ausführungsform enthält das mineralische Bindemittel 5 - 95 Gew.-%, insbesondere 5 - 65 Gew.-%, im Speziellen 15 - 35 Gew.-%, latent-hydraulische und/oder puzzolanische Bindemittel.

Im Besonderen enthält die mineralische Bindemittelzusammensetzung, jeweils bezogen auf den Bindemittelgehalt, 0.001 - 3 Gew.-%, insbesondere 0.01 - 1 Gew.-%, speziell 0.1 - 0.5 Gew.-%, Magnesiumcarbonat.

Der Begriff "Erhärtungsbeschleuniger" steht insbesondere für eine Substanz, welche, falls einem mineralischen Bindemittel zugesetzt und verglichen mit einer Nullprobe ohne zugesetzte Substanz bzw. ohne Erhärtungsbeschleuniger, zu einer Erhöhung der Druckfestigkeit des mineralischen Bindemittels nach einem definierten Zeitpunkt nach dem Anmachen führt. Dies insbesondere nach 4 - 8 Stunden, im Besonderen nach 6 - 8 Stunden. Die Bestimmung der Druckfestigkeiten erfolgt insbesondere nach Norm EN 12390-3:2009-07.

Die Zusammensetzung liegt als wässrige Suspension oder Aufschlämmung (auch als Slurry bezeichnet) vor, wobei insbesondere das Calciumoxid in Form von suspendierten Partikeln vorliegt. Derartige Supsensionen können z.B. bis zu mehreren Stunden vor der eigentlichen Verwendung der Zusammensetzung, z.B. als Erhärtungsbeschleuniger, oder der Zugabe zu einer Bindemittelzusammensetzung hergestellt werden und bleiben während dieser Zeit im Wesentlichen stabil.

Die Aufschlämmung oder Suspension ist insbesondere während wenigstens 5 Minuten, insbesondere während wenigstens 15 Minuten, bevorzugt während wenigstens 30 Minuten, mit Vorteil während wenigstens 60 Minuten, speziell während wenigstens 120 Minuten, lagerstabil. "Lagerstabil" meint vorliegend, dass die Menge des eingesetzten Calciumoxids in der Zusammensetzung während des betrachteten Zeitraums unter Standardbedingungen (Raumtemperatur von 25°C; Luftdruck 1 atm) um höchstens 10 Gew.-%, insbesondere höchstens 5 Gew.-% oder höchstens 1 Gew-% abnimmt.

Besonders bevorzugt enthält oder besteht die Zusammensetzung aus:
a) 40 - 60 Gew.-%, Calciumoxid;
b) 0.1 - 15 Gew.-%, insbesondere 0.1 - 10 Gew.-%, bevorzugt 0.2 - 5 Gew.-%, im Besonderen 0.3 - 2 Gew.-%, des Inhibitors für die Reaktion von Calciumoxid mit Wasser ausgewählt aus einem Phosphorsäureester eines mehrwertigen Alkohols und/oder aus Kohlenhydraten, bevorzugt aus einem Phosphorsäureester eines mehrwertigen Alkohols; und
c) 40 - 60 Gew.-%, Wasser;

jeweils bezogen auf das Gesamtgewicht der Zusammensetzung, wobei die
Zusammensetzung insbesondere als Aufschlämmung oder Suspension vorliegt.

Speziell bevorzugt ist eine Zusammensetzung oder ein Erhärtungsbeschleuniger mit 40 - 60 Gew.-%, Calciumoxid, 0.2 - 5 Gew.-%, insbesondere 1 - 5 Gew.-%, des Inhibitors und 40 - 60 Gew.-% Wasser, jeweils bezogen auf das Gesamtgewicht der Zusammensetzung oder des Erhärtungsbeschleunigers. Der Zusammensetzung, insbesondere der Erhärtungsbeschleuniger, liegt dabei im Besonderen als Aufschlämmung vor.

Der Inhibitor ist ausgewählt aus einem Phosphorsäureester eines mehrwertigen Alkohols und/oder aus Kohlenhydrate. Diese Substanzen haben sich vorliegend als vorteilhaft erwiesen, da sie einerseits eine gute Inhibierende Wirkung aufweisen, andererseits die Wirkung des CaO nicht beeinträchtigen bzw. sogar noch verbessern.

In einer besonders bevorzugten Ausführungsform umfasst der Inhibitor einen Phosphorsäureester eines mehrwertigen Alkohols. Wie es sich bezeigt hat, wirken Phosphorsäureester von mehrwertigen Alkoholen nicht nur als Inhibitoren, sondern verstärken in Kombination mit dem Calciumoxid dessen beschleunigende Wirkung überproportional. Die Substanzen können somit derart funktional zusammenwirken, derart dass eine weitaus stärker beschleunigende Wirkung erreicht wird als mir den Einzelsubstanzen alleine.

Phosphorsäureester von mehrwertigen Alkoholen, insbesondere Glycerinphosphat, Dinatriumglycerinphosphat und/oder ein Hydrat davon, wirken im vorliegenden Zusammenhang also auch als Beschleuniger und/oder als Co-Beschleuniger für das Calciumoxid.

Die Phosphorsäureester von mehrwertigen Alkoholen sind demnach bifunktional, da sie in Bezug auf die Reaktion von Wasser mit Calciumoxid eine inhibierende Wirkung aufweisen, zugleich aber in mineralischen Bindemitteln eine beschleunigende Wirkung haben. Dies kommt überraschend und konnte in dieser Weise nicht erwartet werden.

Unter dem Begriff "mehrwertiger Alkohol" wird eine hydroxyfunktionelle Verbindung mit mehr als einer Hydroxylgruppe verstanden, beispielsweise mit zwei, drei, vier oder fünf Hydroxylgruppen. Besonders bevorzugt ist ein Alkohol mit drei Hydroxylgruppen, das heisst ein dreiwertiger Alkohol. Als Alkohole geeignet sind beispielsweise mehrwertige Alkylalkohole wie Propandiol, Butandiol, Glycerin, Diglycerin, Polyglycerin, Trimethylolethan, Trimethylolpropan, 1,3,5-Pentantriol, Erythrit, Pentaerythrit, Dipentanerythrit, Sorbit, Sorbitan, Glucose, Fructose, Sorbose oder Isosorbid. Besonders bevorzugt ist Glycerin.

Der Phosphorsäureester eines mehrwertigen Alkohols kann durch Veresterung aus einem mehrwertigen Alkohol mit Phosphorsäure und/ oder einem Salz von Phosphorsäure erhalten werden. Vorzugsweise ist der Ester ein Partialester oder partieller Ester eines mehrwertigen Alkohols, vorzugsweise eines dreiwertigen Alkohols. Unter dem Begriff "Partialester oder partieller Ester eines mehrwertigen Alkohols" versteht man, dass der mehrwertige Alkohol neben einer oder mehreren Esterbindungen noch eine oder mehrere freie Hydroxylgruppen aufweist. Der Ester kann ein Mono-, Di- oder Triester sein. Bevorzugt ist ein Monoester, vorzugsweise ein Monoester eines zwei- oder dreiwertigen Alkohols, besonders bevorzugt eines dreiwertigen Alkohols, insbesondere bevorzugt von Glycerin.

Die Phosphorsäure zur Herstellung des Esters kann als freie Säure oder auch als Salz oder Teilsalz vorliegen, wobei der Term "Salz" hier und im Folgenden das Produkt einer Neutralisationsreaktion der Phosphorsäure mit einer Base, und der sich nach Trocknung bildenden Phosphate bezieht. "Teilsalz" bedeutet, dass nicht alle Säurefunktionen der Phosphorsäure neutralisiert worden sind.

Vorzugsweise werden die allfälligen übrigen freien Säuregruppen des Phosphorsäureesters ganz oder teilweise neutralisiert, sodass ein Metallsalz, insbesondere ein Alkali- und/oder Erdalkalisalz, vorliegt. Insbesondere handelt es sich um ein Salz eines ein- oder mehrwertigen Kations, vorzugsweise um ein Natrium-, Kalium-, Calcium-, Magnesium-, Zink- und/oder Aluminiumsalz, besonders bevorzugt um ein Natrium- und/oder Aluminiumsalz. In basischem, wässrigem Milieu können die freien Säuregruppen selbstverständlich auch deprotoniert in anionischer Form vorliegen.

Geeignete Phosphorsäureester für den erfindungsgemässen Erhärtungsbeschleuniger sind beispielsweise Glycerinphosphate. Bevorzugt ist Glycerinmonophosphat, besonders bevorzugt ist Glycerin-2-phosphat, Glycerin-3-phosphat und/oder Hydrate davon.

Ganz besonders bevorzugt umfasst der mindestens eine Phosphorsäureester Glycerinphosphat, Dinatriumglycerinphosphat und/oder ein Hydrat davon.

In einer weiteren vorteilhaften Ausführungsform umfasst der Inhibitor wenigstens ein Kohlenhydrat. Der Begriff Kohlenhydrat umfasst vorliegend insbesondere auch Derivate.

Das Kohlenhydrat beinhaltet dabei insbesondere wenigstens einen Vertreter aus der Gruppe bestehend aus Fructose, Saccharose, Glucose, Lactose, Mannose, Ribose, Galactose, Fucose, Rhamonose, Lactulose, Maltose, Trehalose, Melezitose, Raffinose, Melasse, Caramel und Umbelliferose. Ebenfalls eingesetzt werden können beispielsweise Glycerol, Glukonat, insbesondere Natriumgluconat, hydrolysierte Stärke und/oder Futtermelasse.

Im Speziellen beinhaltet das wenigstens ein Kohlenhydrat ein Mono- und/oder ein Disaccharid. Ganz besonders bevorzugt umfasst das wenigstens eine Kohlenhydrat Melasse, Glucose, Fructose und/oder Saccharose. Besonders bevorzugt sind Glucose, Fructose und/oder Saccharose, im Besonderen Glucose.

Weiter ist es beispielsweise auch möglich, als Inhibitor eine Kombination aus einem Phosphorsäureester eines mehrwertigen Alkohols und einem Kohlenhydrat zu verwenden. Dabei handelt es sich mit Vorteil um die oben genannten und als vorteilhaft beschrieben Vertreter, insbesondere um eine Kombination aus Glycerinphosphat, Dinatriumglycerinphosphat und/oder ein Hydrat davon mit Melasse, Glucose, Fructose und/oder Saccharose.

Das Calciumoxid weist ganz besonders bevorzugt eine spezifische Oberfläche von 1 - 50 m²/g, bevorzugt 1.5 - 30 m²/g, insbesondere 1.9 - 10 m²/g Calciumoxid auf. Die Bestimmung der spezifischen Oberfläche erfolgt insbesondere nach dem BET-Verfahren (N₂ Adsorption, gemessen nach DIN ISO 9277:2003-05). Eine hohe spezifische Oberfläche führt zu einer Verbesserung der Beschleunigerwirkung. Um dieselbe Beschleunigungswirkung zu erzielen kann verglichen mit Calciumoxid mit geringer spezifischer Oberfläche anteilsmässig weniger Calciumoxid mit hoher spezifischer Oberfläche eingesetzt werden.

Falls der Inhibitor einen Phosphorsäureester eines mehrwertigen Alkohols umfasst, wird die Menge des Phosphorsäureesters zur Menge des Calciumoxids bevorzugt so angepasst, dass 0.001 bis 0.05, bevorzugt 0.005 bis 0.04, besonders bevorzugt 0.008 bis 0.02 g Phosphorsäureester pro m² Calciumoxid vorliegen.

Ein Gewichtsverhältnis des Calciumoxids zum mindestens einen Phosphorsäureester eines mehrwertigen Alkohols liegt mit Vorteil im Bereich von 100:1 - 1:1, bevorzugt 50:1 - 5:1, insbesondere 30:1 - 10:1. Derartige Verhältnisse ergeben optimale Beschleunigungswirkungen bei gleichzeitig guter Verarbeitbarkeit der Bindemittelzusammensetzungen.

Besonders bevorzugt liegt die Zusammensetzung, insbesondere ein Erhärtungsbeschleuniger, als Aufschlämmung oder Suspension vor und enthält oder besteht, jeweils bezogen auf das Gesamtgewicht der Zusammensetzung aus:
a) 25 - 60 Gew.-%, Calciumoxid;
b) 0.5 - 10 Gew.-%, insbesondere 1 - 5 Gew.-%, eines Phosphorsäureesters eines mehrwertigen Alkohols, insbesondere Glycerinphosphat, Dinatriumglycerinphosphat und/oder ein Hydrat; und
c) 25 - 60 Gew.-%, Wasser.

In einer weiteren vorteilhaften Ausführungsform enthält die erfindungsgemässe Zusammensetzung, insbesondere ein Erhärtungsbeschleuniger, mindestens ein Alkalimetallcarbonat.

Mit dem Begriff "Carbonat" sind vorliegend Salze und/oder Ester der Kohlensäure (H₂CO₃) gemeint. Insbesondere handelt es sich um Salze. Von der zweiprotonigen (zweibasigen) Kohlensäure leiten sich dabei zwei Reihen von Salzen ab: (i) die Hydrogencarbonate, die auch primäre Carbonate genannt werden (MHCO₃; basierend auf dem Hydrogencarbonat-Anion HCO₃⁻) und (ii) die sekundären Carbonate (M₂CO₃; basierend auf dem Carbonat-Anion CO₃²⁻). "M" steht dabei für ein Metallion oder eine Mischung aus unterschiedlichen Metallionen, vorliegend ein Alkalimetallion oder eine Mischung aus unterschiedlichen Alkalimetallionen.

Im vorliegenden Zusammenhang haben sich sekundäre Carbonate (M₂CO₃) als bevorzugt herausgestellt. Entsprechend ist das Alkalimetallcarbonat bevorzugt ein sekundäres Carbonat oder eine Verbindung der Formel M₂CO₃.

Insbesondere umfasst das Alkalimetall des mindestens einen Alkalimetallcarbonats Natrium und/oder Kalium. Im Besonderen beinhaltet das mindestens eine Alkalimetallcarbonat Natriumcarbonat (Na₂CO₃) und/oder Kaliumcarbonat (K₂CO₃). Ganz besonders bevorzugt ist Natriumcarbonat (Na₂CO₃).

Falls der Inhibitor einen Phosphorsäureester eines mehrwertigen Alkohols umfasst liegt bei der Zusammensetzung oder bei der Verwendung desselben ein Gewichtsverhältnis des mindestens einen Phosphorsäureesters eines mehrwertigen Alkohols zum mindestens einen Alkalimetallcarbonat mit Vorteil im Bereich von 1:1 - 10:1, bevorzugt 1.5:1 - 5:1, insbesondere 2:1 - 3:1.

Damit werden besonders starke Erhärtungsbeschleunigungen erzielt, insbesondere nach 4 - 8 Tagen, und zugleich kann die Verarbeitbarkeit der Bindemittelzusammensetzungen in einem für die Praxis relevanten Bereich aufrechterhalten werden.

Gemäss einer vorteilhaften Ausführungsform umfasst der mindestens eine Phosphorsäureester Glycerinphosphat, Dinatriumglycerinphosphat und/oder ein Hydrat davon und das mindestens eine Alkalimetallcarbonat umfasst Natriumcarbonat (Na₂CO₃) und/oder Kaliumcarbonat (K₂CO₃). Ganz besonders bevorzugt handelt es sich dabei um Natriumcarbonat (Na₂CO₃). Derartige Zusammensetzungen haben sich als besonders effektiv erwiesen ohne dabei die Verarbeitbarkeit von mineralischen Bindemittelzusammensetzungen wesentlich zu beeinträchtigen.

Gemäss einer weiteren vorteilhaften Ausführungsform wird die erfindungsgemässe Zusammensetzung, insbesondere ein Erhärtungsbeschleuniger, in Kombination mit wenigstens einer weiteren erhärtungsbeschleunigenden Substanz eingesetzt oder er enthält diese. Grundsätzlich können hierbei eine Vielzahl von dem Fachmann bekannten Substanzen eingesetzt werden. Besonders vorteilhaft umfasst die weitere erhärtungsbeschleunigende Substanz jedoch ein oder mehrere der folgenden Vertreter:
a) ein oder mehrere weitere Aminoalkohole und/oder Salze davon
b) ein oder mehrere Alkali- und/oder Erdalkalinitrate
c) ein oder mehrere Alkali- und/oder Erdalkalinitrite
d) ein oder mehrere Alkali- und/oder Erdalkalithiocyanate
e) ein oder mehrere a-Hydroxycarbonsäuren
f) ein oder mehrere Alkali- und/oder Erdalkalihalogenide
g) Glyzerin und/oder Glyzerinderivate
h) ein oder mehrere Glykole und/oder Glykolderivate
i) ein oder mehrere Aluminiumsalze
j) ein oder mehrere Alkali- und/oder Erdalkalihydroxide

Wie sich gezeigt hat, sind die erfindungsgemässen Zusammensetzungen oder Erhärtungsbeschleuniger mit diesen Vertretern von weiteren erhärtungsbeschleunigenden Substanzen im Allgemeinen gut kompatibel. Damit lässt sich beispielsweise eine flexible Anpassung an spezielle Verwendungen realisieren.

Es kann auch vorteilhaft sein, wenn die Zusammensetzung, insbesondere ein Erhärtungsbeschleuniger, in Kombination mit wenigstens einem Zusatzmittel, beispielsweise einem Betonzusatzmittel und/oder einem Mörtelzusatzmittel, und/oder Prozesschemikalien verwendet wird. Das wenigstens eine Zusatzmittel umfasst insbesondere einen Entschäumer, einen Farbstoff, ein Konservierungsmittel, ein Fliessmittel, einen Verzögerer, einen Luftporenbildner, einen Schwindreduzierer und/oder einen Korrosionsinhibitor oder Kombinationen davon.

Mit Vorteil wird die Zusammensetzung, insbesondere ein Erhärtungsbeschleuniger zusammen mit einem Fliessmittel oder Verflüssiger eingesetzt oder er enthält ein solches. Als Fliessmittel kommen beispielsweise Lignosulfonate, sulfonierte Naphthalin-Formaldehyd-Kondensate, sulfonierte Melamin-Formaldehyd-Kondensate, sulfonierte Vinylcopolymere, Polycarboxylate, Polycarboxylatverflüssiger oder Mischungen davon, in Frage.

Das Fliessmittel beinhaltet im Speziellen ein Polycarboxylat, insbesondere einen Polycaboxylatether. Insbesondere ist das Fliessmittel ein Kammpolymer umfassend ein Polycarboxylatrückgrat mit daran gebundenen Polyetherseitenketten. Die Seitenketten sind dabei insbesondere über Ester-, Ether-, Imid- und/oder Amidgruppen an das Polycarboxylatrückgrat gebunden.

Vorteilhafte Fliessmittel sind z.B. Copolymere aus (Meth)acrylsäure- und/oder Maleinsäuremonomeren sowie Monomeren ausgewählt aus Polyalkylenglykolvinyl-ethern, Polyalkylenglykol-(meth)allyl-ethern, oder Polyalkylenglykolisoprenyl-ethern. Besonders geeignet sind z.B. Copolymere aus Maleinsäure oder deren Derivaten, Allylethern, insbesondere Allyl-Polyethylenglycole, und Vinylacetat. Entsprechende Copolymere sowie deren Herstellung sind beispielsweise in der EP 2 468 696 A1 (Sika Technology AG) beschrieben. Insbesondere geeignet sind z.B. sind die Copolymere P-1 bis P-4 wie sie in den Absätzen 0058 bis 0061 und Tabelle 1 der EP 2 468 696 A1 beschrieben sind.

Ebenfalls geeignet sind beispielsweise Copolymere aus Maleinsäure oder deren Derivaten, Allylethern, insbesondere Allyl-Polyethylenglycole, und (Meth)acrylsäure. Derartige Copolymere und deren Herstellung sind in der EP 2 522 680 A1 (Sika Technology AG) beschrieben. Vorteilhaft sind dabei z.B. sind die Copolymere P-1 bis P-4 wie sie in den Absätzen 0063 bis 0070 und Tabelle 1 der EP 2 522 680 A1 beschrieben sind.

Des Weiteren sind geeignete Polycarboxylatether und Herstellungsverfahren beispielsweise offenbart in der EP 1 138 697 B1 auf Seite 7 Zeile 20 bis Seite 8 Zeile 50, sowie in dessen Beispielen oder in EP 1 061 089 B1 auf Seite 4, Zeile 54 bis Seite 5 Zeile 38 sowie in deren Beispielen. In einer Abart davon, wie sie in EP 1 348 729 A1 auf Seite 3 bis Seite 5 sowie in deren Beispielen beschrieben sind, kann das Kammpolymer in festem Aggregatszustand hergestellt werden.

Die Offenbarungen der im Zusammenhang mit den Fliessmitteln genannten Patentschriften werden hiermit insbesondere durch Bezugnahme eingeschlossen.

Entsprechende Kammpolymere werden auch von Sika Schweiz AG unter der Handelsnamenreihe ViscoCrete^{®} kommerziell vertrieben.

Insbesondere liegt ein Gewichtsverhältnis des mindestens einen Fliessmittels zum mindestens einen Phosphorsäureester eines mehrwertigen Alkohols im Bereich von 1:1 - 10:1, bevorzugt 1.5:1 - 5:1, insbesondere 2:1 - 3:1. Damit können z.B. gute Verflüssigungswirkungen bei zugleich effektiver Erhärtungsbeschleunigung erreicht werden. Das Fliessmittel beeinträchtigt dabei die Wirkung des Erhärtungsbeschleunigers kaum oder gar nicht.

Die Zusammensetzung, insbesondere ein Erhärtungsbeschleuniger, kann grundsätzlich in unterschiedlichsten Formen vorliegen. Insbesondere können die einzelnen Komponenten der Zusammensetzung als individuelle Komponenten räumlich nebeneinander vorliegen, insbesondere als sogenanntes "Kit-of Parts". Es ist aber auch möglich, einzelne oder alle Komponenten des Beschleunigers in fester und/oder flüssiger Form vorzumischen.

Im Besonderen liegt die erfindungsgemässe Zusammensetzung, insbesondere ein Erhärtungsbeschleuniger, in Form eines wenigstens zweikomponentigen Zusammensetuzung vor, wobei Calciumoxid, Inhibitor und optional Wasser in einer ersten Komponente vorhanden sind, während weitere Bestandteile der Zusammensetzung zusammen in wenigstens einer zweiten Komponente vorliegen oder getrennt voneinander als weitere individuelle Komponenten vorliegen. Dadurch kann z.B. die Lagerbeständigkeit und/oder Wirkung verbessert werden. Bevorzugt enthält die erste Komponente in diesem Fall kein Wasser.

Die Komponenten der wenigstens zweikomponentigen Zusammensetzung liegen insbesondere räumlich getrennt vor, z.B. in wenigstens zwei individuellen Behältnissen oder in einem Behältnis mit mindestens wenigstens zwei räumlich getrennten Bereichen.

Allfällige weitere Bestandteile, wie z.B. ein Fliessmittel können in der ersten und/oder in einer zweiten Komponente und/oder in einer weiteren, räumlich getrennten Komponente vorliegen. Die weitere Komponente kann beispielsweise in einem weiteren individuellen Behältnis oder in einem weiteren räumlich getrennten Bereich eines Behältnisses mit mehreren räumlich getrennten Bereichen vorliegen.

Die Zusammensetzung, insbesondere ein Erhärtungsbeschleuniger, oder eine oder mehrere der Komponenten, insbesondere Beschleunigerkomponenten, können in flüssiger und/oder in fester Form vorliegen, was nicht beansprucht ist. Falls die Zusammensetzung oder die Komponenten in flüssiger Form vorliegen, handelt es sich um wässrige Aufschlämmungen oder wässrige Suspensionen. Für den Fall, dass die Zusammensetzung oder eine oder mehrere der Komponenten in fester Form vorliegen, was nicht beansprucht ist, werden diese z.B. als Pulver, Pellets, Schuppen und/oder auf einem festen Trägermaterial aufgebracht, eingesetzt.

In einem weiteren Aspekt betrifft die vorliegende Erfindung eine Zusammensetzung, insbesondere eine Bindemittelzusammensetzung, enthaltend eine Komponente einer mineralischen Bindemittelzusammensetzung, insbesondere ein Bindemittel und/oder Aggregate und/oder ein Zusatzmittel, sowie eine wie vorstehend beschriebene Zusammensetzung, insbesondere einen Erhärtungsbeschleuniger. Insbesondere ist die Zusammensetzung eine Bindemittelzusammensetzung enthaltend ein mineralisches Bindemittel. Das mineralische Bindemittel, die Aggregate und das Zusatzmittel sind dabei wie vorstehend definiert. Die Zusammensetzung kann z.B. in trockener Form oder als eine mit Anmachwasser angemachte fluide oder angesteifte Bindemittelzusammensetzung vorliegen. Auch kann die Zusammensetzung als eine ausgehärtete Bindemittelzusammensetzung, z.B. als Formkörper, vorliegen.

Ein Anteil des Erhärtungsbeschleunigers bezogen auf das Gewicht eines Bindemittels, falls vorhanden, beträgt insbesondere 0.01 - 10 Gew.-%, speziell 0.1 - 5 Gew.-%.

Bevorzugt für die vorliegende Erfindung ist es, das Calciumoxid in der Bindemittelzusammensetzung so zu dosieren, dass sich ein Verhältnis der Gesamtoberfläche des Calciumoxids zur Menge von mineralischem Bindemittel von ungefähr 50 bis 70 m²/kg Bindemittel, bevorzugt ungefähr 55 bis 65 m²/kg Bindemittel, besonders bevorzugt ungefähr 57 bis 63 m²/kg Bindemittel, ergibt. Die Gesamtoberfläche des Calciumoxids bezeichnet hierbei das mathematische Produkt der spezifischen Oberfläche [in m²/g; nach BET (N₂ Adsorption, gemessen nach DIN ISO 9277:2003-05)] und der Einsatzmenge (in Gramm pro kg mineralisches Bindemittel).

Falls bei einer Bindemittelzusammensetzung als Inhibitor ein Phosphorsäureester eines mehrwertigen Alkohols, insbesondere Glycerinphosphat, Dinatriumglycerinphosphat und/oder ein Hydrat davon, verwendet wird, liegt dieses, bezogen auf die Menge an Bindemittel, bevorzugt in einer Menge von 0.001 bis 5 Gew.-%, bevorzugt 0.005 bis 1 Gew.-%, besonders bevorzugt 0.01 bis 0.6 Gew.-% oder 0.1 bis 0.3 Gew.-%, vor.

Falls bei einer Bindemittelzusammensetzung als Inhibitor ein Kohlenhydrat, insbesondere ein Mono- und/oder ein Disaccharid wie beispielsweise Fructose und/oder Saccharose, verwendet wird, liegt dieses, bezogen auf die Menge an Bindemittel, mit Vorteil in einer Menge von 0.001 - 1 Gew.-%, insbesondere 0.005 - 0.5 Gew.-%, insbesondere 0.01 - 0.125 Gew.-%, vor.

Besonders bevorzugt enthält die Bindemittelzusammensetzung bezogen auf das Gewicht des Bindemittels:
a) Calciumoxid mit einem Anteil von 0.001 bis 10 Gew.-%, bevorzugt 0.1 bis 9 Gew.-%, im Speziellen 2 - 9 Gew.-%, besonders bevorzugt 2.5 bis 6 Gew.-%;
b) einen Phosphorsäureester eines mehrwertigen Alkohols, insbesondere Glycerinphosphat, Dinatriumglycerinphosphat und/oder ein Hydrat davon, in einer Menge von 0.001 bis 5 Gew.-%, bevorzugt 0.005 bis 1 Gew.-%, besonders bevorzugt 0.01 bis 0.6 Gew.-% oder 0.1 bis 0.3 Gew.-%;
c) optional ein Kohlenhydrat, insbesondere ein Mono- und/oder ein Disaccharid wie beispielsweise Fructose und/oder Saccharose, in einer Menge von 0.001 - 1 Gew.-%, insbesondere 0.005 - 0.5 Gew.-%, insbesondere 0.01 - 0.125 Gew.-%;
d) optional ein Alkalimetallcarbonat, insbesondere Natriumcarbonat (Na₂CO₃) und/oder Kaliumcarbonat (K₂CO₃), in einer Menge von 0.001 bis 6 Gew.-%, bevorzugt 0.01 bis 2 Gew.-%, besonders bevorzugt 0.02 bis 0.1 Gew.-% oder 0.04 - 0.08 Gew.-%.

Im Besonderen enthält die Zusammensetzung zudem ein wie vorstehend beschriebenes Fliessmittel. Falls vorhanden, weist das Fliessmittel bezogen auf das mineralische Bindemittel mit Vorteil einen Anteil von 0.01 - 6 Gew.-%, insbesondere 0.1 - 4 Gew.- %, weiter bevorzugt 0.5 - 3 Gew.-%, auf. Aufgrund der Kombination mit dem Fliessmittel kann die Verarbeitbarkeit der Bindemittelzusammensetzung verbessert werden und zugleich werden höhere Druckfestigkeiten erreicht. Letzteres insbesondere auch zu späten Zeiten, z.B. nach 28 Tagen.

Optional ist zudem ein wie vorstehend beschriebenes Zusatzmittel, insbesondere ein Betonzusatzmittel und/oder einem Mörtelzusatzmittel, und/oder eine weitere erhärtungsbeschleunigende Substanz in der Zusammensetzung vorhanden.

Abgesehen von speziellen Verwendungen ist es im Allgemeinen besonders vorteilhaft, wenn die erfindungsgemässen Zusammensetzungen, insbesondere Erhärtungsbeschleuniger, mit gewissen Substanzen nicht kombiniert werden. Insbesondere enthalten die erfindungsgemässen Zusammensetzungen keine zusätzlichen Nitrate und/oder Nitrite. Dies insbesondere aufgrund der Toxizität und Korrosivität solcher Verbindungen. Ebenso weisen die erfindungsgemässen Zusammensetzungen mit Vorteil keine zusätzlichen Thiocyanate auf. Thiocyanate sind gesundheitsgefährdend und im Hinblick auf die Korrosion ebenfalls problematisch. Zudem kann es insbesondere auch vorteilhaft sein, wenn die erfindungsgemässen Zusammensetzungen keine zusätzlichen Halogenide, Alkalihydroxide, Aluminiumsalze, Glyzerin und/oder α-Hydroxycarbonsäuren aufweisen. Für spezielle Anwendung kann die Zusammensetzung, insbesondere ein Erhärtungsbeschleuniger, aber dennoch mit derartigen Substanzen kombiniert werden.

Ein zusätzlicher Aspekt der vorliegenden Erfindung, welcher nicht beansprucht ist, bezieht sich auf einen Formkörper, welcher erhältlich ist durch Aushärten einer wie vorstehend beschriebenen Zusammensetzung umfassend mindestens ein mineralisches Bindemittel nach Zugabe von Wasser. Der so hergestellte Formkörper kann dabei nahezu jede beliebige Form aufweisen und beispielsweise Bestandteil eines Bauwerks, wie z.B. eines Gebäudes, eines Mauerwerks, eines Bohrlochs oder einer Brücke, sein.

In einem weiteren Aspekt betrifft die Erfindung ein Verfahren zur Herstellung einer einer Bindemittelzusammensetzung. Dabei wird eine wie vorstehend beschriebene Zusammensetzung, insbesondere ein Erhärtungsbeschleuniger, mit wenigstens einem Bestandteil einer Bindemittelzusammensetzung, insbesondere einem Bindemittel, Aggregaten und/oder dem Anmachwasser, vermischt. Insbesondere wird dabei ein Teil der Zusammensetzung, insbesondere des Erhärtungsbeschleunigers, oder eine Komponente der Zusammensetzung, im Speziellen die gesamte Zusammensetzung, vor dem Anmachen der Bindemittelzusammensetzung zugegeben.

Die Zusammensetzung, insbesondere ein Erhärtungsbeschleuniger, liegt dabei als Aufschlämmung oder Suspension vor. Die Suspension enthält oder besteht aus:
a) 25 - 60 Gew.-% Calciumoxid und
b) 0.1 - 15 Gew.-% eines Inhibitors für die Reaktion von Calciumoxid mit Wasser, ausgewählt aus einem Phosphorsäureester eines mehrwertigen Alkohols und/oder aus Kohlenhydraten und
c) 25 - 60 Gew.-%, Wasser.

Insbesondere wird die Zusammensetzung, bevorzugt ein Erhärtungsbeschleuniger, oder eine Komponente davon vor einer Zugabe von Anmachwasser zu einem festen Bestandteil der Bindemittelzusammensetzung, insbesondere zu einem Bindemittel und/oder Aggregaten, zugegeben. Der feste Bestandteil verfügt dabei insbesondere über eine Restfeuchte, im Besonderen über einen Anteil an Restfeuchte von 0.001 - 20 Gew.-%, bevorzugt 0.01 - 10 Gew.-%, insbesondere 0.1 - 5 Gew.-%, bezogen auf das Gesamtgewicht des Bestandteils inklusive Restfeuchte.

Es ist aber auch möglich, vollständig trockene Bestandteile zu verwenden.

Die Restfeuchte kann dabei z.B. in an sich bekannter Weise gravimetrisch bestimmt werden. Hierbei kann der Wassergehalt oder der Gehalt an Restfeuchte, beispielsweise an einer Materialprobe des festen Bestandteils, durch den Gewichtsverlust beim Trocknen bestimmt werden.

Hierfür wird die Materialprobe nach der Entnahme luftdicht verpackt und gewogen. Anschliessend wird die Probe in einem Trockenofen bei beispielsweise ca. 105°C getrocknet, bis sich Gewichtskonstanz bei aufeinanderfolgenden Wägungen einstellt.

Die Trocknungsdauer und -temperatur wird insbesondere materialabhängig gewählt, so dass bei der Trocknung kein chemisch gebundenes Wasser freigesetzt wird. Deshalb kann die Trocknungstemperatur, je nach festem Bestandteil, beispielsweise auch geringer als 105°C gewählt werden, z.B. bei Gips bei ca. 40°C. Allenfalls ergibt sich bei geringerer Trocknungstemperatur eine längere Trocknungsdauer. Da jeweils bis zu Gewichtskonstanz bei aufeinanderfolgenden Wägungen gemessen wird, spielen Trocknungstemperatur und Trocknungsdauer aber keine Rolle in Bezug auf den Gehalt an Restfeuchte.

Nach dem Trocknen wird die Materialprobe erneut gewogen. Aus der Differenz der Wägungen lässt sich der Wassergehalt der Materialprobe oder der Gehalt an Restfeuchte ermitteln.

Ebenfalls möglich sind Messungen der Restfeucht mit elektromagnetischer Strahlung wie z.B. mit Mikrowellen. Entsprechende Geräte sind kommerziell erhältlich, z.B. der Mikrowellensensor Hydro-Probe der Firma Hydronix (Niederlande).

Die Zusammensetzung, insbesondere ein Erhärtungsbeschleuniger, wird dabei bezogen auf das Gewicht des Bindemittels insbesondere mit einem Anteil von 0.01 - 10 Gew.-%, insbesondere 0.1 - 5 Gew.-%, eingesetzt. Die Mengen an Calciumoxid, Inhibitor und gegebenenfalls Alkalimetallcarbonat welche vorzugsweise eingesetzt werden, sind dieselben, wie sie bereits vorstehen im Zusammenhang mit der Zusammensetzung oder der Bindemittelzusammensetzung beschrieben wurden.

Im Besonderen wird zudem ein wie vorstehend beschriebenes Fliessmittel beigemischt, insbesondere mit einem Anteil von 0.01 - 6 Gew.-%, insbesondere 0.1 - 4 Gew.- %, weiter bevorzugt 0.5 - 3 Gew.-%, bezogen auf den Gehalt an mineralischem Bindemittel.

Optional können zudem ein wie vorstehend beschriebenes Zusatzmittel, insbesondere ein Betonzusatzmittel und/oder einem Mörtelzusatzmittel, und/oder eine weitere erhärtungsbeschleunigende Substanz beigegeben werden.

Die Bestandteile der Zusammensetzung, insbesondere eines Erhärtungsbeschleunigers, oder die Zusammensetzung, insbesondere ein Erhärtungsbeschleuniger, können aber prinzipiell zu jedem Zeitpunkt vor oder während dem Anmachen zum mineralischen Bindemittel gegeben werden.

Gemäss einer weiteren Variante kann die Zusammensetzung, insbesondere ein Erhärtungsbeschleuniger, wenigstens teilweise, insbesondere vollständig, vor und/oder während einem Mahlprozess des mineralischen Bindemittels zum mineralischen Bindemittel zugegeben. Dadurch werden die Substanzen besonders gut mit dem mineralischen Bindemittel vermischt und ein zusätzlicher Mischvorgang entfällt. Überraschenderweise wurde gefunden, dass die Wirkung der Zusammensetzung, insbesondere eines Erhärtungsbeschleunigers, durch den Mahlprozess nicht beeinträchtigt wird.

Wie vorstehend bereits dargelegt, ist es, abgesehen von speziellen Verwendungen, im Allgemeinen besonders vorteilhaft, wenn die erfindungsgemässen Zusammensetzungen, insbesondere Erhärtungsbeschleuniger, mit gewissen Substanzen nicht kombiniert werden. Insbesondere werden die erfindungsgemässen Zusammensetzungen ohne zusätzliche Nitrate und/oder Nitrite verwendet. Ebenso werden die erfindungsgemässen Zusammensetzungen mit Vorteil ohne zusätzliche Thiocyanate verwendet. Zudem kann es insbesondere auch vorteilhaft sein, wenn die erfindungsgemässen Zusammensetzungen ohne zusätzliche Halogenide, Alkalihydroxide, Aluminiumsalze, Glyzerin und/oder α-Hydroxycarbonsäuren verwendet werden.

In einem weiteren Aspekt bezieht sich die vorliegende Erfindung auf die Verwendung einer Zusammensetzungen, bevorzugt eines Erhärtungsbeschleunigers, in Form einer Suspension oder Aufschlämmung, zur Beschleunigung des Erhärtens von mineralischen Bindemitteln und/oder Bindemittelzusammensetzungen, insbesondere einer zementösen Bindemittelzusammensetzung, bevorzugt einer Mörtel- Bohrlochzement- und/oder Betonzusammensetzung.

Ebenfalls kann die erfindungsgemässe Zusammensetzung zur Beschleunigung des Abbindens und/oder Erhärtens von Spritzbetonzusammensetzungen eingesetzt werden.

Im Besonderen wird die erfindungsgemässe Zusammensetzung zur Erhöhung der Druckfestigkeit einer mineralischen Bindemittelzusammensetzung nach 6 Minuten, 1 Stunde, 4 Stunden, 6 Stunden, 8 Stunden, 1 Tag, 2 Tage und/oder 28 Tagen eingesetzt. Speziell handelt es sich um die Druckfestigkeit nach 4 - 8 Stunden.

Weiter kann die erfindungsgemässe Zusammensetzung in vorteilhafterweise als Abbinde- und/oder Erhärtungsbeschleuniger bei hohen Temperaturen, insbesondere über 50°C, und/oder hohen Drücken, insbesondere von mehr als 1.5 bar, eingesetzt werden. Im Speziellen liegen die Temperaturen dabei über 75°C, insbesondere über 100°C oder über 150°C. Die Drücke liegen im Besonderen bei über 10 bar, insbesondere über 50 bar oder über 100 bar.

Im Speziellen kann die erfindungsgemässe Zusammensetzung bei Tiefbohrungen, übertiefen Bohrungen, Grossbohrlochbohrungen und/oder in Bohrlöchern verwendet werden.

Weiter betrifft die Erfindung die Verwendung eines Phosphorsäureester eines mehrwertigen Alkohols und/oder eines Kohlenhydrats zur Stabilisierung einer Zusammensetzung enthaltend Calciumoxid und Wasser und/oder zur Inhibierung der Reaktion von Calciumoxid mit Wasser. Dies insbesondere in Anwesenheit von Bestandteilen einer mineralischen Bindemittelzusammensetzung, speziell Aggregaten und/oder einem mineralischen Bindemittel.

Der Phosphorsäureester eines mehrwertigen Alkohols und/oder das Kohlenhydrat wird im Besonderen zur zeitlichen Kontrolle der Stabilität einer Zusammensetzung enthaltend Calciumoxid und Wasser und/oder zur zeitlichen Kontrolle der Inhibierung der Reaktion von Calciumoxid mit Wasser eingesetzt. Hierbei wird insbesondere die zeitliche Stabilität durch die Menge des Inhibitors gesteuert.

Im Besonderen wird ein Phosphorsäureester eines mehrwertigen Alkohols zur Stabilisierung einer Zusammensetzung enthaltend Calciumoxid und Wasser und/oder zur Inhibierung der Reaktion von Calciumoxid mit Wasser sowie zugleich zur Beschleunigung des Erhärtens von mineralischen Bindemitteln und/oder Bindemittelzusammensetzungen enthaltend Calciumoxid, insbesondere einer zementösen Bindemittelzusammensetzung, bevorzugt einer Mörtel- und/oder Betonzusammensetzung, verwendet.

Die verwendeten Inhibitoren, insbesondere Phosphorsäureester von mehrwertigen Alkoholen und Kohlenhydraten sind dabei wie vorstehend beschrieben definiert. Besonders bevorzugt werden dabei Glycerinphosphat, Dinatriumglycerinphosphat und/oder ein Hydrat als Phosphorsäureester von mehrwertigen Alkoholen verwendet.

Die nachfolgenden Ausführungsbeispiele verdeutlichen die Erfindung weiter.

### Ausführungsbeispiele

### 1. Substanzen und Methoden

### 1.1. Substanzen

Folgende Substanzen wurden für die Ausführungsbeispiele verwendet:

**Tabelle 1: Verwendete Substanzen**

| **Abkürzung** | **Substanz** |
|---|---|
| **PCE** | Polycarboxylatether-Fliessmittel (z.B. Sika^{®} Viscocrete^{®} 20 HE, erhältlich bei Sika Schweiz AG); Feststoffgehalt: 40 Gew.-% |
| **GPD** | Glycerin-Phosphat Dinatriumsalz (erhältlich bei Sigma Aldrich Schweiz); 10 Gew.-% in H₂O |
| **NaCt** | Natriumcarbonat; 10 Gew.-% in H₂O |
| **CaOx** | Calciumoxid (Nekafin^{®} 2 von Kalkfabrik Netstal AG, Schweiz, mit einer spezifischen Oberfläche (BET) von 1.9 m²/g) |
| **CarC** | Caramel Colour 1085 (Zuckercouleur vom Typ INS Nr. 150a, erhältlich bei Sugro AG, Schweiz); Trockengehalt: 60 Gew.-% |
| **Fruct** | Fruktose in Pulverform |
| **Gluc** | D (+) Glukose monohydrat in Pulverform |
| **Sac** | Saccharose in Pulverform |
| **Glyc** | Glycerol (> 90%) |
| **NaGlu** | Natriumglukonat in Pulverform. |

Natriumcarbonat ist kommerziell bei verschiedenen Anbietern in Reinform (Reinheit > 97%) erhältlich. Dieses wurde jeweils in der in Tabelle 1 angegebenen Menge in Wasser gelöst und als wässrige Lösungen eingesetzt.

### 1.2 Herstellung von Aufschlämmungen

### 1.2.1 Aufschlämmung mit GPD

Es wurde eine erfindungsgemässe Aufschlämmung bestehend aus 24 g **CaOx**, 16 g Wasser und 12 g **GPD** (= 1.2 g Glycerin-Phosphat Dinatriumsalz und 10.8 g Wasser) durch Vermischen hergestellt. Die Aufschlämmung wird im Folgenden als Aufschlämmung **SL** bezeichnet.

Die so hergestellt Aufschlämmung **SL** hat sich als lagerstabil während wenigstens 30 Minuten erwiesen.

### 1.2.2 Weitere Aufschlämmungen

Des Weiteren wurden Aufschlämmungen mit verschiedenen anderen Inhibitoren hergestellt. Sämtliche Aufschlämmungen enthalten 30 g **CaOx**, 28 g Wasser und die in der nachfolgenden Tabelle aufgeführten Inhibitoren in den genannten Mengen.

Die Aufschlämmungen SLK11 und SLK15 sind nicht erfindungsgemäss.

**Tabelle 2**

| **Bezeichnung** | **Inhibitor** | **Menge [g]** | **Stabilität [min]** |
|---|---|---|---|
| **SLK1** | **CarC** | 0.25 | 1 |
| **SLK2** | | 0.5 | 2 |
| **SLK3** | | 1.0 | 9 |
| **SLK4** | **Fruc** | 0.1 | 2.5 |
| **SLK5** | | 0.25 | 10 |
| **SLK6** | | 0.5 | 18 |
| **SLK7** | **Glu** | 0.13 | 1 |
| **SLK8** | | 0.19 | 3 |
| **SLK9** | | 0.25 | 15 |
| **SLK10** | | 0.5 | 40 |
| **SLK11** | **Glyc** | 0.5 | 20 |
| **SLK12** | **Sac** | 0.25 | 3 |
| **SLK13** | | 0.5 | 10 |
| **SLK14** | | 3.0 | 66 |
| **SLK15** | **NaGlu** | 0.5 | 4 |

Die Stabilitäten der so hergestellten Aufschlämmungen SLK1 - SLK15 sind der Tabelle zu entnehmen und können durch die Art und Menge des Inhibitors auf Werte zwischen 1 und 66 Minuten eingestellt werden.

### 1.3 Mörtelmischungen

Die eingesetzte Mörtelmischung **M1** weist die in Tabelle 3 beschriebenen Trockenzusammensetzungen auf.

**Tabelle 3: Trockenzusammensetzung Mörtelmischung**

| **Komponente** | **M1** |
|---|---|
| Portlandzement vom Typ CEM I 52.5 R (Normo 5R; erhältlich bei Holcim Schweiz) | 750 g |
| Kalksteinfüller* | 141 g |
| Sand 0-1 mm* | 738 g |
| Sand 1-4 mm* | 1107 g |
| Sand 4-8 mm* | 1154 g |

| | |
|---|---|
| *Angaben zur Restfeuchte der jeweils verwendeten Aggregate finden sich in Tabelle 4. | |

Zum Anmachen der Mörtelmischungen wurden die Sande, der Kalksteinfüller, der Zement und gegebenenfalls eine Aufschlämmung oder **CaOx** bei einer Temperatur von 20°C während 1 Minute in einem Hobart-Mischer trocken gemischt. Innerhalb von 30 Sekunden wurde das Anmachwasser (Wasser/Zement-Wert bzw. w/z = 0.44), dem vorgängig das Polycarboxylatether-Fliessmittel (**PCE**; stets 0.9 Gew.-% bezogen auf Zement) und gegebenenfalls weitere Substanzen **(NaCt, GPD)** beigemischt wurde, zugegeben und noch weitere 2.5 Minuten gemischt. Die Gesamtmischzeit nass dauerte jeweils 3 Minuten.

### 1.3 Testverfahren

Zur Bestimmung der Wirksamkeit der Aufschlämmungen als Erhärtungsbeschleuniger wurden die Druckfestigkeiten von unterschiedlichen Mörtelmischungen 6 Stunden nach dem Anmachen der Mörtelmischungen bestimmt. Die Prüfung zur Bestimmung der Druckfestigkeit (in N/mm²) erfolgte an Prismen (40 x 40 x 160mm) gemäss den Normen EN 12390-1 bis 12390-4.

Unmittelbar nach dem Anmachen der Mörtelmischungen wurde auch das jeweilige Ausbreitmass (ABM) gemessen. Das Ausbreitmass (ABM) der Mörtelmischungen wurde gemäss EN 1015-3 gemessen.

Die Feuchtigkeit der Aggregate (Sande, Kalksteinfüller) wurde wie vorstehend beschrieben gravimetrisch bestimmt.

### 2. Mörteltests

Um die Wirkungen der erfindungsgemässen Erhärtungsbeschleuniger aufzuzeigen, wurden verschiedene Mörteltest durchgeführt.

Die Versuche **A1**, **B1** und **C1** sind nicht erfindungsgemässe Vergleichsversuche, bei welchen abgesehen vom Verflüssiger (**PCE**) keine erhärtungsbeschleunigenden Zusätze zugegeben wurden. Bei den erfindungsgemässen Versuchen **A2**, **B2** und **C2** wurde die Aufschlämmung **SL** mit dem Sand, dem Kalksteinfüller und dem Zement vor der Zugabe des Anmachwassers wie in Kapitel 1.3 beschrieben jeweils trocken gemischt. Die Aufschlämmung **SL** wurde jeweils ca. 10 Minuten vor der Zugabe hergestellt. Bei den erfindungsgemässen Versuchen **A3**, **B3** und **C3** wurde **CaOx** mit dem Sand, dem Kalksteinfüller und dem Zement vor der Zugabe des Anmachwassers trocken gemischt und **GPD** zusammen mit dem Anmachwasser zugegeben.

Die Versuche **A1** - **A3** wurde mit vollständig trockenen Aggregaten (0 Gew.-% Feuchtigkeit) durchgeführt, während bei den Versuchen **B1** - **B3** sowie **C1** - **C3** jeweils feuchte Aggregate verwendet wurden.

**Tabelle 4: Ergebnisse Mörtelversuche**

| **Nr.** | **Feuchtigkeit Aggregate¹** | **NaCt²** | **CaOx³** | **GPD²** | **SL^{#}** | **ABM⁺** [mm] | **Druckfestigkeit** nach 6 h [MPa] |
|---|---|---|---|---|---|---|---|
| **A1** | 0 | - | - | - | - | 230 | 0.9 |
| **A2** | | 0.06 | - | - | 6.5 | 204 | 8.3 |
| **A3** | | 0.06 | 3.00 | 1.50 | - | 195 | 7.9 |
| **B1** | 2 | - | - | - | - | 232 | 0.8 |
| **B2** | | 0.06 | - | - | 6.5 | 202 | 7.4 |
| **B3** | | 0.06 | 3.00 | 1.50 | - | 235 | 0.9 |
| **C1** | 6 | - | - | - | - | 232 | 0.8 |
| **C2** | | 0.06 | - | - | 6.5 | 178 | 5.9 |
| **C3** | | 0.06 | 3.00 | 1.50 | - | 235 | 0.9 |

| | | | | | | | |
|---|---|---|---|---|---|---|---|
| ¹Gew.-% bezogen auf das Gesamtgewicht der Aggregate (Sand und Kies; inklusive Restfeuchte) ²Zugabe mit Anmachwasser; Gew.-% bezogen auf Zementgehalt ³Zugabe zu Aggregaten vor Zugabe des Anmachwassers; Gew.-% bezogen auf Zementgehalt ^{#}Zugabe zu Trockenmischung; Gew.-% bezogen auf Zementgehalt ⁺Ausbreitmass unmittelbar nach dem Anmachen | | | | | | | |

Ein Vergleich der Versuche **A2** und **A3** zeigt, die vorgängig hergestellte Aufschlämmung **SL** als Erhärtungsbeschleuniger mit trockenen Aggregaten mindestens so gut wirkt, wie die getrennte Zugabe der Einzelkomponenten. Auch die Verarbeitbarkeit bleibt auf hohem Niveau aufrechterhalten, wie ohne Beschleuniger (Versuch **A1)**.

Versuch **B2** zeigt, dass die beschleunigende Wirkung der Aufschlämmung auch bei feuchten Aggregaten aufrechterhalten werden kann. Dagegen führt die vorgängige Zugabe von **CaOx** ohne inhibierendes **GPD** (dieses wird erst zeitlich verzögert mit dem Anmachwasser zugegeben) bei feuchten Aggregaten zu einer starken Abnahme der Beschleunigerwirkung (Versuch **B3)**. Dies obschon die gesamthaft eingesetzten Mengen an **CaOx** und **GPD** in den Versuchen **B2** und **B3** im Wesentlichen gleich sind. Aufgrund des bei Versuch **B3** fehlenden Inhibitors ist das **CaOx** aber ungeschützt der Feuchtigkeit der Aggregate ausgesetzt. Ein Vergleich der Versuche **C2** und **C3** ergibt ein analoges Bild.

Die vorstehend beschriebenen Ausführungsformen sind jedoch lediglich als illustrative Beispiele zu verstehen, welche im Rahmen der Erfindung beliebig abgewandelt werden können.

So kann in den Beispielen z.B. **NaCt** als zusätzlich Komponente weggelassen werden. Dabei resultieren geringere Druckfestigkeiten. In qualitativer Hinsicht ändert sich jedoch nichts an den beschriebenen Wirkungen und Effekte.

Auch kann anstelle oder zusätzlich von **GPD** ein anderer Inhibitor eingesetzt werden, z.B. ein anderen Phosphorsäureester und/oder ein Kohlenhydrat, wie z.B. Glucose, Fructose und/oder Saccharose.

Ebenfalls möglich ist es z.B., den Zement wenigstens teilweise durch eine latent-hydraulische und/oder puzzolanische Bindemittel zu ersetzen. Auch können zusätzlich oder anstelle der beschriebenen Aggregate (Sande, Kalksteinfüller) grössere Aggregate verwendet werden, um z.B. eine Betonzusammensetzung zu erhalten. Die vorstehend beschriebenen Wirkungen und Effekte ändern sich dadurch nicht.

## Patentansprüche

1. Zusammensetzung, insbesondere ein Erhärtungsbeschleuniger für mineralische Bindemittel, enthaltend oder bestehend aus:
a) 25 - 60 Gew.-% Calciumoxid;
b) 0.1 - 15 Gew.-%, insbesondere 0.1 - 10 Gew.-%, bevorzugt 0.2 - 5 Gew.-%, im Besonderen 0.3 - 2 Gew.-%, eines Inhibitors für die Reaktion von Calciumoxid mit Wasser, ausgewählt aus einem Phosphorsäureester eines mehrwertigen Alkohols und/oder aus Kohlenhydraten, bevorzugt aus einem Phosphorsäureester eines mehrwertigen Alkohols; und
c) 25 - 60 Gew.-% Wasser;
jeweils bezogen auf das Gesamtgewicht der Zusammensetzung,
wobei die Zusammensetzung als Aufschlämmung oder Suspension vorliegt.

2. Zusammensetzung nach Anspruch 1, **dadurch gekennzeichnet, dass** die Zusammensetzung als wässrige Suspension oder Aufschlämmung vorliegt, wobei das Calciumoxid in Form von suspendierten Partikeln vorliegt.

3. Zusammensetzung nach Anspruch 1, **dadurch gekennzeichnet, dass** der Inhibitor einen Phosphorsäureester umfasst, welcher ausgewählt ist aus Glycerinphosphat, Dinatriumglycerinphosphat und/oder einem Hydrat davon.

4. Zusammensetzung nach wenigstens einem der Ansprüche 1 - 2, **dadurch gekennzeichnet, dass** der Inhibitor ein Kohlenhydrat beinhaltet, welches wenigstens einen Vertreter aus der Gruppe bestehend aus Fructose, Saccharose, Glucose, Lactose, Mannose, Ribose, Galactose, Fucose, Rhamonose, Lactulose, Maltose, Trehalose, Melezitose, Raffinose, Melasse, Caramel und Umbelliferose umfasst.

5. Zusammensetzung nach wenigstens einem der vorangehenden Ansprüche, **dadurch gekennzeichnet, dass** das Calciumoxid eine spezifischen Oberfläche von 1 - 50 m²/g, bevorzugt zwischen 1.5 und 30 m²/g, insbesondere zwischen 1.9 und 10 m²/g Calciumoxid aufweist.

6. Zusammensetzung, insbesondere ein Erhärtungsbeschleuniger, nach wenigstens einem der vorangehenden Ansprüche, wobei die Zusammensetzung als Aufschlämmung oder Suspension vorliegt und, jeweils bezogen auf das Gesamtgewicht der Zusammensetzung folgende Bestandteile enthält oder daraus besteht:
a) 25 - 60 Gew.-% Calciumoxid;
b) 0.5 - 10 Gew.-%, insbesondere 1 - 5 Gew.-%, eines Phosphorsäureesters eines mehrwertigen Alkohols, insbesondere Glycerinphosphat, Dinatriumglycerinphosphat und/oder ein Hydrat; und
c) 25 - 60 Gew.-% Wasser.

7. Zusammensetzung nach wenigstens einem der vorangehenden Ansprüche, enthaltend mindestens ein Alkalimetallcarbonat, wobei insbesondere das mindestens eine Alkalimetallcarbonat Natriumcarbonat (Na₂CO₃) und/oder Kaliumcarbonat (K₂CO₃) umfasst, bevorzugt Natriumcarbonat (Na₂CO₃).

8. Zusammensetzung, insbesondere ein Erhärtungsbeschleuniger, nach wenigstens einem der vorangehenden Ansprüche, **dadurch gekennzeichnet, dass** die Zusammensetzung in Form einer wenigstens zweikomponentigen Zusammensetzung vorliegt, wobei das Calciumoxid, der Inhibitor und optional Wasser in einer ersten Komponente vorhanden sind, während weitere Bestandteile der Zusammensetzung zusammen in einer zweiten Komponente vorliegen oder getrennt voneinander als weitere individuelle Komponenten vorliegen.

9. Bindemittelzusammensetzung, enthaltend eine Zusammensetzung nach einem der vorangehenden Ansprüche und zusätzlich enthaltend eine Komponente einer mineralischen Bindemittelzusammensetzung, insbesondere ein Bindemittel und/oder Aggregate.

10. Bindemittelzusammensetzung nach Anspruch 9 enthaltend wenigstens ein mineralisches Bindemittel und, jeweils bezogen auf den Bindemittelgehalt:
a) Calciumoxid mit einem Anteil von 0.001 bis 10 Gew.-%, bevorzugt 0.1 bis 9 Gew.-%, im Speziellen 2 - 9 Gew.-%, besonders bevorzugt 2.5 bis 6 Gew.-%;
b) einen Phosphorsäureester eines mehrwertigen Alkohols, insbesondere Glycerinphosphat, Dinatriumglycerinphosphat und/oder ein Hydrat davon, in einer Menge von 0.001 bis 5 Gew.-%, bevorzugt 0.005 bis 1 Gew.-%, besonders bevorzugt 0.01 bis 0.6 Gew.-% oder 0.1 bis 0.3 Gew.-%;
c) optional ein Kohlenhydrat, insbesondere ein Mono- und/oder ein Disaccharid wie beispielsweise Fructose und/oder Saccharose, in einer Menge von 0.001 - 1 Gew.-%, insbesondere 0.005 - 0.5 Gew.-%, insbesondere 0.01 - 0.125 Gew.-%;
d) optional ein Alkalimetallcarbonat, insbesondere Natriumcarbonat (Na₂CO₃) und/oder Kaliumcarbonat (K₂CO₃), in einer Menge von 0.001 bis 6 Gew.-%, bevorzugt 0.01 bis 2 Gew.-%, besonders bevorzugt 0.02 bis 0.1 Gew.-% oder 0.04 - 0.08 Gew.-%.

11. Verfahren zur Herstellung einer Bindemittelzusammensetzung nach einem der Ansprüche 9 - 10, wobei eine Zusammensetzung nach einem der Ansprüche 1 - 8 mit wenigstens einem Bestandteil einer Bindemittelzusammensetzung, insbesondere einem Bindemittel, Aggregaten und/oder dem Anmachwasser, vermischt wird.

12. Verwendung einer Zusammensetzung nach wenigstens einem der Ansprüche 1 - 8 zur Beschleunigung des Abbindens und/oder Erhärtens von mineralischen Bindemitteln und/oder Bindemittelzusammensetzungen, insbesondere einer zementösen Bindemittelzusammensetzung, bevorzugt einer Mörtel- und/oder Betonzusammensetzung.

13. Verwendung nach Anspruch 12 wobei die Zusammensetzung zur Beschleunigung des Abbindens und/oder Erhärtens von Spritzbetonzusammensetzungen eingesetzt wird.

14. Verwendung nach wenigstens einem der Ansprüche 12 - 13, wobei die Zusammensetzung zur Erhöhung der Druckfestigkeit einer mineralischen Bindemittelzusammensetzung nach 6 Minuten, 1 Stunde, 4 Stunden, 6 Stunden, 8 Stunden, 1 Tag, 2 Tage und/oder 28 Tagen eingesetzt wird.

15. Verwendung nach wenigstens einem der Ansprüche 12 - 14, bei hohen Temperaturen, insbesondere über 50°C, und/oder hohen Drücken, insbesondere von mehr als 1.5 bar.

16. Verwendung nach wenigstens einem der Ansprüche 12 - 15 bei Tiefbohrungen, übertiefen Bohrungen, Grossbohrlochbohrungen und/oder in Bohrlöchern.

17. Verwendung eines Phosphorsäureester eines mehrwertigen Alkohols und/oder ein eines Kohlenhydrats zur Stabilisierung einer Zusammensetzung enthaltend Calciumoxid und Wasser und/oder zur Inhibierung der Reaktion von Calciumoxid mit Wasser.

18. Verwendung nach Anspruch 17, wobei der Phosphorsäureester eines mehrwertigen Alkohols und/oder das Kohlenhydrat zur zeitlichen Kontrolle der Stabilität einer Zusammensetzung enthaltend Calciumoxid und Wasser und/oder zur zeitlichen Kontrolle der Inhibierung der Reaktion von Calciumoxid mit Wasser eingesetzt wird.

## Claims

1. Composition, in particular a curing accelerator for mineral binders, containing or consisting of:
a) 25-60% by weight of calcium oxide;
b) 0.1-15% by weight, in particular 0.1-10% by weight, preferably 0.2-5% by weight, especially 0.3-2% by weight, of an inhibitor for the reaction of calcium oxide with water, selected from a phosphoric acid ester of a polyhydric alcohol and/or from carbohydrates, preferably from a phosphoric acid ester of a polyhydric alcohol; and
c) 25-60% by weight of water;
in each case based on the total weight of the composition, where the composition is present as slurry or suspension.

2. Composition according to Claim 1, **characterized in that** the composition is present as aqueous suspension or slurry, with the calcium oxide being present in the form of suspended particles.

3. Composition according to Claim 1, **characterized in that** the inhibitor comprises a phosphoric acid ester selected from among glyceryl phosphate, disodium glyceryl phosphate and/or a hydrate thereof.

4. Composition according to at least one of Claims 1-2, **characterized in that** the inhibitor comprises a carbohydrate comprising at least one representative of the group consisting of fructose, sucrose, glucose, lactose, mannose, ribose, galactose, fucose, rhamonose, lactulose, maltose, trehalose, melezitose, raffinose, molasses, caramel and umbelliferose.

5. Composition according to at least one of the preceding claims, **characterized in that** the calcium oxide has a specific surface area of 1-50 m²/g, preferably from 1.5 to 30 m²/g, in particular from 1.9 to 10 m²/g of calcium oxide.

6. Composition, in particular a curing accelerator, according to at least one of the preceding claims, wherein the composition is present as slurry or suspension and contains or consists of the following constituents, in each case based on the total weight of the composition:
a) 25-60% by weight of calcium oxide;
b) 0.5-10% by weight, in particular 1-5% by weight, of a phosphoric acid ester of a polyhydric alcohol, in particular glyceryl phosphate, disodium glyceryl phosphate and/or a hydrate; and
c) 25-60% by weight of water.

7. Composition according to at least one of the preceding claims containing at least one alkali metal carbonate, wherein, in particular, the at least one alkali metal carbonate comprises sodium carbonate (Na₂CO₃) and/or potassium carbonate (K₂CO₃), preferably sodium carbonate (Na₂CO₃) .

8. Composition, in particular a curing accelerator, according to at least one of the preceding claims, **characterized in that** the composition is present in the form of an at least two-component composition, with the calcium oxide, the inhibitor and optionally water being present in a first component while further constituents of the composition are present together in a second component or are present separately from one another as further individual components.

9. Binder composition containing a composition according to any of the preceding claims and additionally containing a component of a mineral binder composition, in particular a binder and/or aggregates.

10. Binder composition according to Claim 9 containing at least one mineral binder and, in each case based on the binder content:
a) calcium oxide in a proportion of from 0.001 to 10% by weight, preferably from 0.1 to 9% by weight, especially 2-9% by weight, particularly preferably from 2.5 to 6% by weight;
b) a phosphoric acid ester of a polyhydric alcohol, in particular glyceryl phosphate, disodium glyceryl phosphate and/or a hydrate thereof, in an amount of from 0.001 to 5% by weight, preferably from 0.005 to 1% by weight, particularly preferably from 0.01 to 0.6% by weight or from 0.1 to 0.3% by weight;
c) optionally a carbohydrate, in particular a monosaccharide and/or a disaccharide such as fructose and/or sucrose, in an amount of 0.001-1% by weight, in particular 0.005-0.5% by weight, in particular 0.01-0.125% by weight;
d) optionally an alkali metal carbonate, in particular sodium carbonate (Na₂CO₃) and/or potassium carbonate (K₂CO₃), in an amount of from 0.001 to 6% by weight, preferably from 0.01 to 2% by weight, particularly preferably from 0.02 to 0.1% by weight or 0.04-0.08% by weight.

11. Process for producing a binder composition according to either of Claims 9-10, wherein a composition according to any of Claims 1-8 is mixed with at least one constituent of a binder composition, in particular a binder, aggregates and/or the mixing water.

12. Use of a composition according to at least one of Claims 1-8 for accelerating the setting and/or curing of mineral binders and/or binder compositions, in particular a cement-based binder composition, preferably a mortar composition and/or concrete composition.

13. Use according to Claim 12, wherein the composition is used for accelerating the setting and/or curing of spray concrete compositions.

14. Use according to at least one of Claims 12-13, wherein the composition is used for increasing the compressive strength of a mineral binder composition after 6 minutes, 1 hour, 4 hours, 6 hours, 8 hours, 1 day, 2 days and/or 28 days.

15. Use according to at least one of Claims 12-14 at high temperatures, in particular above 50°C, and/or high pressures, in particular more than 1.5 bar.

16. Use according to at least one of Claims 12-15 in deep wells, extra-deep wells, well drill holes and/or in boreholes.

17. Use of a phosphoric acid ester of a polyhydric alcohol and/or of a carbohydrate for stabilizing a composition containing calcium oxide and water and/or for inhibiting the reaction of calcium oxide with water.

18. Use according to Claim 17, wherein the phosphoric acid ester of a polyhydric alcohol and/or the carbohydrate is used for controlling the stability over time of a composition containing calcium oxide and water and/or for controlling the inhibition of the reaction of calcium oxide with water over time.

## Revendications

1. Composition, en particulier accélérateur de durcissement pour un liant minéral, contenant ou constituée par
a) 25-60% en poids d'oxyde de calcium ;
b) 0,1-15% en poids, en particulier 0,1-10% en poids, de préférence 0,2-5% en poids, en particulier 0,3-2% en poids d'un inhibiteur pour la réaction d'oxyde de calcium avec de l'eau, choisi parmi un ester d'acide phosphorique d'un alcool polyvalent et/ou parmi les hydrates de carbone, de préférence parmi un ester d'acide phosphorique d'un alcool polyvalent ; et
c) 25-60% en poids d'eau ;
à chaque fois par rapport au poids total de la composition,
la composition se trouvant sous forme de bouillie ou de suspension.

2. Composition selon la revendication 1, **caractérisée en ce que** la composition se trouve sous forme de suspension ou de bouillie aqueuse, l'oxyde de calcium se trouvant sous forme de particules en suspension.

3. Composition selon la revendication 1, **caractérisée en ce que** l'inhibiteur comprend un ester d'acide phosphorique, qui est choisi parmi un phosphate de glycérol, un phosphate de glycérol disodique et/ou un hydrate de ceux-ci.

4. Composition selon au moins l'une des revendications 1 à 2, **caractérisée en ce que** l'inhibiteur comporte un hydrate de carbone, qui comprend au moins un représentant du groupe constitué par le fructose, le saccharose, le glucose, le lactose, le mannose, le ribose, le galactose, le fucose, le rhamnose, le lactulose, le maltose, le tréhalose, le mélézitose, le raffinose, la mélasse, le caramel et l'ombelliférone.

5. Composition selon au moins l'une des revendications précédentes, **caractérisée en ce que** l'oxyde de calcium présente une surface spécifique de 1-50 m²/g, de préférence entre 1,5 et 30 m²/g, en particulier entre 1,9 et 10 m²/g d'oxyde de calcium.

6. Composition, en particulier accélérateur de durcissement, selon au moins l'une des revendications précédentes, la composition se trouvant sous forme de bouillie ou de suspension et contenant ou étant constituée par, à chaque fois par rapport au poids total de la composition :
a) 25-60% en poids d'oxyde de calcium ;
b) 0,5-10% en poids, en particulier 1-5% en poids, d'un ester d'acide phosphorique d'un alcool polyvalent, en particulier le phosphate de glycérol, le phosphate de glycérol disodique et/ou un hydrate ; et
c) 25-60% en poids d'eau.

7. Composition selon au moins l'une des revendications précédentes, contenant au moins un carbonate de métal alcalin, en particulier ledit au moins un carbonate de métal alcalin comprenant du carbonate de sodium (Na₂CO₃) et/ou du carbonate de potassium (K₂CO₃), de préférence du carbonate de sodium (Na₂CO₃).

8. Composition, en particulier accélérateur de durcissement, selon au moins l'une des revendications précédentes, **caractérisée en ce que** la composition se trouve sous forme d'une composition au moins à deux composants, l'oxyde de calcium, l'inhibiteur et éventuellement l'eau se trouvant dans un premier composant alors que d'autres constituants de la composition se trouvent ensemble dans un deuxième composant ou séparément les uns des autres sous forme de composants individuels.

9. Composition de liant, contenant une composition selon l'une des revendications précédentes et contenant en plus un composant d'une composition de liant minéral, en particulier un liant et/ou des agrégats.

10. Composition de liant selon la revendication 9, contenant au moins un liant minéral et, à chaque fois par rapport à la teneur en liant :
a) de l'oxyde de calcium en une proportion de 0,001 à 10% en poids, de préférence de 0,1 à 9% en poids, en particulier de 2 à 9% en poids, de manière particulièrement préférée de 2,5 à 6% en poids ;
b) un ester d'acide phosphorique d'un alcool polyvalent, en particulier le phosphate de glycérol, le phosphate de glycérol disodique et/ou un hydrate de ceux-ci, en une quantité de 0,001 à 5% en poids, de préférence de 0,005 à 1% en poids, de manière particulièrement préférée de 0,01 à 0,6% en poids ou de 0,1 à 0,3% en poids ;
c) éventuellement un hydrate de carbone, en particulier un monosaccharide et/ou un disaccharide tel que par exemple le fructose et/ou le saccharose, en une quantité de 0,001-1% en poids, en particulier de 0,005-0,5% en poids, en particulier de 0,01-0,125% en poids ;
d) éventuellement un carbonate de métal alcalin, en particulier du carbonate de sodium (Na₂CO₃) et/ou du carbonate de potassium (K₂CO₃), en une quantité de 0,001 à 6% en poids, de préférence de 0,01 à 2% en poids, de manière particulièrement préférée de 0,02 à 0,1% en poids ou de 0,04-0,08% en poids.

11. Procédé pour la préparation d'une composition de liant selon l'une des revendications 9 à 10, une composition selon l'une des revendications 1 à 8 étant mélangée avec au moins un constituant d'une composition de liant, en particulier un liant, des agrégats et/ou l'eau de gâchage.

12. Utilisation d'une composition selon au moins l'une des revendications 1 à 8 pour l'accélération de la prise et/ou du durcissement de liants minéraux et/ou de compositions de liant, en particulier d'une composition de liant cimentaire, de préférence d'une composition de mortier et/ou de béton.

13. Utilisation selon la revendication 12, la composition étant utilisée pour l'accélération de la prise et/ou du durcissement de compositions de béton à projeter.

14. Utilisation selon au moins l'une des revendications 12 à 13, la composition étant utilisée pour augmenter la résistance à la compression d'une composition de liant minéral après 6 minutes, 1 heure, 4 heures, 6 heures, 8 heures, 1 jour, 2 jours et/ou 28 jours.

15. Utilisation selon au moins l'une des revendications 12 à 14, à des températures élevées, en particulier supérieures à 50°C, et/ou à des pressions élevées, en particulier supérieures à 1,5 bar.

16. Utilisation selon au moins l'une des revendications 12 à 15 lors de forages profonds, de forages très profonds, de forages de grands trous de sondage et/ou dans des puits.

17. Utilisation d'un ester d'acide phosphorique d'un alcool polyvalent et/ou d'un hydrate de carbone pour la stabilisation d'une composition contenant de l'oxyde de calcium et de l'eau et/ou pour l'inhibition de la réaction d'oxyde de calcium avec de l'eau.

18. Utilisation selon la revendication 17, l'ester d'acide phosphorique d'un alcool polyvalent et/ou l'hydrate de carbone étant utilisé(s) pour la régulation dans le temps de la stabilité d'une composition contenant de l'oxyde de calcium et de l'eau et/ou pour la régulation dans le temps de l'inhibition de la réaction d'oxyde calcium avec de l'eau.
